# EUROPEAN PATENT APPLICATION

(11) **EP 3 486 985 A1**
(43) Date of publication of application: **22.05.2019**
(21) Application number: 17202186.7
(22) Date of filing: 16.11.2017
(51) Int. Cl.: H01M 6/00, H01M 6/50, H01M 10/04, H01M 10/052, H01M 10/058

(54) **ELECTROCHEMICAL CELL, AS WELL AS PROCESS AND APPARATUS FOR MANUFACTURING THE SAME**

(71) Applicant: Technische Universität München, 80333 München (DE)
(72) Inventor: Günter, Florian, 80802 München (DE); Günther, Till, 81371 München (DE)
(74) Representative: Koplin, Moritz

(57) **Abstract**

Provided is a process for manufacturing an electrochemical cell. The process comprises providing an assembly including electrodes separated by a separator. The separator is permeable to an electrolyte dissolved in a solvent. The process further comprises wetting the assembly in an electrolyte bath, the electrolyte bath containing the electrolyte dissolved in the solvent and saturating the assembly with the electrolyte. After removing superfluous solvent from the assembly, the process is continued with encasing the assembly.

## Description

### FIELD

The present disclosure relates to electrochemical cells. In particular, the present disclosure relates to a process and apparatus for manufacturing electrochemical cells.

### BACKGROUND

Electrochemical cells, and in particular primary or secondary cells are increasingly used to power portable/mobile electric/electronic devices. Moreover, the usage of primary or secondary cells is not limited to electric/electronic devices that are used at places where no mains connection is available or at hand. Rather, the usage of primary or secondary cells may also be convenient and economically feasible in usage scenarios in which the need to replace a cell does not occur frequently.

For example, the energy consumption of a device that is powered by a primary cell may be relatively low compared to the amount of energy stored in the primary cell (e.g., primary cells used in remote controls, clocks, etc.). Moreover, a secondary cell may allow to be recharged many times without substantial capacity loss (e.g., batteries used in flashlights, toys, etc.). Notably, an electric/electronic device that is powered by a secondary cell may comprise an integrated charging device (such as in contemporary mobile phones, laptop or tablet computers, cars, etc.). Hence, usage interruptions may be completely avoided and the cell may remain within the device throughout its lifetime.

As primary or secondary cells are usually produced in large numbers for a great variety of devices, they typically feature a casing (made of metal, plastic, etc.) of standardized size. The casing has two electric terminals that are connected to the cell electrodes, one constituting the negative electrode when discharging the cell (and being referred to as the anode in the following) and the other one constituting the positive electrode when discharging the cell (and being referred to as the cathode in the following). The anode contains an active material that can be oxidized, whereas the cathode contains an active material that can be reduced, such that the anode active material is capable of reducing the cathode active material when discharging the cell.

When a primary or secondary cell is used to power a device, electrical contact is made to the anode and the cathode, allowing electrons to flow through the device and permitting the respective oxidation and reduction reactions to occur. An electrolyte solution in contact with the anode and the cathode contains ions that flow through a separator between the anode and cathode to maintain charge balance throughout the cell during discharge. Thus, longer service periods can be achieved by a higher loading of anode and cathode active materials.

However, as many cells/batteries come in standardized sizes (e.g., AA, AAA, AAAA, C, D, etc.), that have fixed external dimensions and constrained internal volumes, or must fit into (ever shrinking) cell/battery compartments (due to device miniaturization), achieving longer service periods usually requires increasing the energy density of the cells. Moreover, as there is a demand for ever lighter portable/mobile electric/electronic devices, it is usually required to increase the specific energy of the cells. Given the aforesaid (conflicting) objectives, achieving longer service periods remains challenging.

### SUMMARY

The present invention provides a process for manufacturing an electrochemical cell, an apparatus for manufacturing electrochemical cells, and an electrochemical cell, that realize improvements regarding the provision of electrolyte solution to the electrochemical cell(s). Particularly, instead of adding the electrolyte solution to the electrodes/separator-assembly after the assembly has been inserted into its casing (in which the cell is delivered and ready for use), the filling and wetting step is advanced and separated from the encasing step, thereby avoiding (casing-induced) restrictions otherwise imposed on the filling and wetting, and the consecutive processing.

For example, if a formation treatment (including a first charging cycle) is carried out while the assembly is immersed in an electrolyte bath (of larger volume than the cell casing) that contains a sufficient surplus of electrolyte, the assembly and particularly the anode and/or the cathode can be (evenly) saturated with electrolyte ions, thus avoiding a premature termination of the formation due to electrolyte depletion and providing for a higher loading of active materials. Furthermore, superfluous solvent (and superfluous electrolyte) can be removed from the assembly before or after the formation treatment has been finished to reduce the weight/size of the cell(s).

I.e., prior art solutions based on adding a surplus of electrolyte solution to the encased assembly to safeguard the wetting and formation against electrolyte depletion, which also increases cell volume/weight due to the presence of superfluous solvent (and superfluous electrolyte) in the cell(s), can be avoided without risking performance loss due to uneven wetting and/or electrolyte depletion during the formation. Moreover, degassing the electrolyte solution (before, during, and after the formation) may be facilitated because gases may flow more freely within the electrolyte bath, as the assembly typically occupies (substantially) the whole volume of the casing (to provide for high energy density), thereby obstructing degassing channels.

For instance, the gas may more easily force its way out of between stacked or rolled electrodes, as a counter-pressure (exerted by the casing on the assembly) that would hold the assembly structures in place and possibly obstruct a degassing path may be substantially reduced/avoided, as a gap between the wall(s) of the electrolyte bath and the assembly may be provided. In addition, a relative motion between the electrolyte solution and the assembly (e.g., a rotation or a stirring or shaking motion) may be enforced. In particular, the wall(s) of the electrolyte bath may be excited to vibrations or solvent may be circulated in and out of the electrolyte bath to keep the electrolyte solution in constant motion. This may allow speeding-up/improving the wetting and/or the degassing process.

The process for manufacturing an electrochemical cell comprises providing an assembly including electrodes separated by a separator, wherein the separator is permeable to an electrolyte dissolved in a solvent, wetting the assembly in an electrolyte bath, the electrolyte bath containing the electrolyte dissolved in the solvent, and saturating the assembly with the electrolyte, removing superfluous solvent from the assembly, and encasing the assembly.

In this regard, the term "electrochemical cell", as used throughout the description and the claims, particularly refers to primary or secondary cells (which when encased and ready for use are commonly referred to as batteries). Furthermore, the term "electrodes" as used throughout the description and the claims, particularly refers to an electrically conductive structure. Moreover, the term "separator", as used throughout the description and the claims, particularly refers to a porous structure (e.g., a permeable membrane or mesh) made from a material that is wettable by the electrolyte solution and allows to separate the anode active material from the cathode active material.

As used throughout the description, a material is said to be wettable/wetted by a liquid if the contact angle between the liquid and the surface is less than 90° and/or when the liquid tends to spread spontaneously across the surface. Moreover, as used throughout the description, active materials are said to be separated by the separator, if the separator is not permeable, or essentially impermeable to the active materials. Electrochemically active anode materials may include a metalloid, a nonmetal, or lithium. Electrochemically active cathode materials may include a transition/post-transition metal and a chalcogen or a halogen, or lithium. Preferably, the electrochemically active cathode and anode materials are wettable by and permeable to the electrolyte solution.

Furthermore, the term "electrolyte bath", as used throughout the description and the claims, particularly refers to an electrolyte solution contained in a vessel. For example, the vessel may have rigid walls and dimensions which allow the assembly to be inserted into the vessel and (substantially fully) immersed into the electrolyte solution without making contact to the vessel's walls (i.e., such that a gap is formed between the outer face of the assembly and the walls of the electrolyte bath).

Moreover, the formulation "saturating the assembly", as used throughout the description and the claims, particularly refers to providing a surplus of electrolyte such that the wetting process and/or the envisaged formation will not (or at least extremely unlikely) starve from electrolyte depletion. For instance, the vessel may be filled (when the assembly is immersed in the electrolyte bath) with more than 105%, more than 110%, more than 125%, or more than 150% of the electrolyte that is (usually) taken from the electrolyte bath (amounting to a surplus of more than 5%, 10%, 25%, or 50% compared to the amount of electrolyte that would be required theoretically). Moreover, the assembly 10 may draw electrolyte solution (within the electrolyte bath) from any direction.

Furthermore, the term "superfluous solvent", as used throughout the description and the claims, may also encompass superfluous electrolyte dissolved in the solvent, if any. For example, the electrolyte concentration in the electrolyte bath may be monitored and additional electrolyte or solvent may be added to the electrolyte bath as necessary, such that at the end of the formation, no electrolyte may be left in the solvent. Alternatively, remaining electrolyte may be separated/recycled from the solvent after the formation. Moreover, some or all the superfluous solvent may be vaporized.

In addition, the formulation "encasing the assembly", as used throughout the description and the claims, particularly refers to inserting the (saturated) assembly into a rigid or flexible casing that is sealed to prevent cell material from leaking outside. As the wetting process is performed before the encasing, the casing may be free from any opening for adding electrolyte solution to the cell. In an example, the casing may have a single opening which allows inserting the assembly into the casing, and which is sealed after the assembly has been inserted, to complete the encasing. Notably, the casing may also comprise conductive vias (that are connected to or part of the terminals).

Thus, besides other apparent advantages such as, for instance, a reduction of time required for completing the manufacturing process, the energy density (energy per unit volume) and the specific energy (energy per unit mass) of the (encased) cell may be increased, as the surplus of electrolyte solution provided during wetting (and formation treatment) ensures a more constant and even wetting and avoids (local and overall) electrolyte depletion, thereby increasing the active material loading, while superfluous (or excess) solvent (and dissolved electrolyte) in the ready for use cell is avoided.

Removing superfluous solvent from the assembly may comprise draining the assembly.

For example, the assembly may be lifted above solvent level and/or the solvent level may be lowered by exhausting solvent from the electrolyte bath, for the superfluous solvent to flow/drip into the electrolyte bath.

The process may further comprise applying a voltage to the electrodes of the assembly while the assembly is immersed in the electrolyte bath.

For example, the formation treatment may be carried-out by connecting the electrodes of the assembly to a direct current, DC, power source, such that an anode active material is reduced and/or a cathode active material is oxidized.

Applying a voltage to the electrodes of the assembly, while the assembly is immersed in the electrolyte bath, may comprise forming a solid-electrolyte-interphase at an anode of the assembly.

In this regard, the term "anode", as used throughout the description and the claims, refers to the negative electrode (when discharging the cell). Moreover, the term "solid-electrolyte-interphase", as used throughout the description and the claims, refers to the interface between a solid (porous) active material and the electrolyte solution.

The electrolyte bath may be provided in a container of an apparatus for manufacturing electrochemical cells. The apparatus may be configured to withdraw solvent from the container after wetting the assembly in the electrolyte bath and/or to adapt an atmospheric pressure within the container before or while filling the container with the dissolved electrolyte.

For instance, the container may have one or more openings for exhausting the solvent (and electrolyte dissolved in the solvent, if any) from the container and/or evacuating/pressurizing the container (with inert gas).

The electrolyte bath may comprise lithium ions.

The electrochemical cell manufacturing apparatus comprises one or more containers, a supply line to fill the one or more containers with an electrolyte solution, and a conveyor to move a plurality of batches of one or more assemblies, one after the other, in a first position relative to the one or more containers, wherein the one or more assemblies are immersed in the electrolyte solution when being positioned in the first position, if the one or more containers are filled with the electrolyte solution.

In this regard, the term "container", as used throughout the description and the claims, particularly refers to a vessel for the electrolyte bath, wherein the vessel is designated for wetting a series of assemblies or batches of assemblies, one after the other. Moreover, the term "supply line", as used throughout the description and the claims, particularly refers to a pipe for feeding the electrolyte solution to the container. Furthermore, the term "conveyor", as used throughout the description and the claims, particularly refers to a transport device that is to move assembled cell elements within or between processing stations (that perform the assembling, wetting/formation, encasing, etc.).

Thus, as discussed above, the energy density and the specific energy of the electrochemical cells may be increased as compared to electrochemical cells manufactured by conventional production processes, whereas a time required for manufacturing the cell may be reduced.

The conveyor may be to move a batch of one or more assemblies from the first position to a second position relative to the one or more containers, wherein the one or more assemblies are above the one or more containers for draining the one or more assemblies when being positioned in the second position.

For example, the one or more assemblies may be lifted above the solvent level and/or the solvent level may be lowered by exhausting solvent from the containers, for the superfluous solvent to flow/drip back into the one or more containers.

The apparatus may further comprise a power line for applying a voltage to electrodes of the one or more assemblies while the one or more assemblies are immersed in the electrolyte solution.

For example, the formation treatment may be carried-out by connecting the electrodes of the one or more assemblies to a direct current, DC, power source, such that the anode active material is reduced and/or the cathode active material is oxidized.

Applying a voltage to the electrodes of the one or more assemblies, while the one or more assemblies are immersed in the electrolyte solution, may comprise forming a solid-electrolyte-interphase at an anode of the one or more assemblies.

The apparatus may further comprise an exhaust line for removing electrolyte solution from the one or more containers.

For example, the exhaust line may be connected to a reservoir for storing (recycled) electrolyte solution for reuse in a subsequent wetting process.

The apparatus may further comprise a filter to filter the removed electrolyte solution, and a reservoir to store the filtered electrolyte solution and to provide the filtered electrolyte solution to the supply line.

Thus, the removed electrolyte solution may be reused.

The electrochemical cell comprises a casing, the casing being impermeable to an electrolyte dissolved in a solvent inside the casing, and an assembly inside the casing, the assembly including electrodes separated by a separator, wherein the separator is permeable to the electrolyte dissolved in the solvent. As a result of removing superfluous solvent from the assembly, 5% or more, or 10% or more of the volume of the casing may be filled with a gas (e.g., nitrogen, helium, etc.).

I.e., the removal of superfluous solvent may reduce the weight of the cell and provide for increased specific energy. Moreover, as the gas can be compressed, the overall volume of the cell may also be reduced to provide for increased energy density.

The electrolyte dissolved in the solvent may comprise lithium ions.

It will be appreciated that the features and attendant advantages of the disclosed apparatus/cell may be realized by the disclosed process and vice versa. Moreover, it is noted that throughout the description, features in brackets are to be regarded as optional.

### BRIEF DESCRIPTION OF THE DRAWINGS

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.
Fig. 1 shows a schematic cross-sectional view of an exemplary assembly;
Fig. 1a shows another schematic cross-sectional view of the assembly of Fig. 1;
Fig. 1b shows enlarged views of the anode and the cathode of the assembly of Fig. 1;
Fig. 2a shows a schematic cross-sectional view of possible modifications of the assembly of Fig. 1;
Fig. 2aa shows a schematic cross-sectional view of an exemplary modification in accordance with Fig. 2a;
Fig. 2ab shows a schematic cross-sectional view of another exemplary modification in accordance with Fig. 2a;
Fig. 2b shows a schematic cross-sectional view of other possible modifications of the assembly of Fig. 1;
Fig. 2ba shows a schematic cross-sectional view of an exemplary modification in accordance with Fig. 2b;
Fig. 2bb shows a schematic cross-sectional view of another exemplary modification in accordance with Fig. 2b;
Fig. 3 shows a schematic cross-sectional view of the assembly of Fig. 1 immersed in an electrolyte bath;
Fig. 3a illustrates immersing the assembly of Fig. 1 into the electrolyte bath, according to an example;
Fig. 3b illustrates immersing the assembly of Fig. 1 into the electrolyte bath, according to another example;
Fig. 4 illustrates adapting an atmospheric pressure within the container;
Fig. 4a illustrates closing the container, according to an example;
Fig. 4b illustrates closing the container, according to another example;
Fig. 5a illustrates providing for a relative motion between the assembly of Fig. 1 and the electrolyte solution, according to an example;
Fig. 5b illustrates providing for a relative motion between the assembly of Fig. 1 and the electrolyte solution, according to another example;
Fig. 5c illustrates providing for a relative motion between the assembly of Fig. 1 and the electrolyte solution, according to yet another example;
Fig. 6 illustrates a formation treatment;
Fig. 6a illustrates degassing during the formation, according to an example;
Fig. 7a illustrates draining the assembly of Fig. 1, according to an example;
Fig. 7b illustrates draining the assembly of Fig. 1, according to another example;
Fig. 7c illustrates draining the assembly of Fig. 1, according to yet another example;
Fig. 8a illustrates batch processing within an electrochemical cell manufacturing apparatus, according to an example;
Fig. 8b illustrates batch processing within an electrochemical cell manufacturing apparatus, according to another example;
Fig. 9a shows a schematic cross-sectional view of an electrochemical cell, according to an example;
Fig. 9b shows a schematic cross-sectional view of an electrochemical cell, according to another example; and
Fig. 10 shows a flow chart of exemplary processes for manufacturing an electrochemical cell.

Notably, the drawings are not drawn to scale and unless otherwise indicated, they are merely intended to conceptually illustrate the structures and procedures described herein.

### DETAILED DESCRIPTION

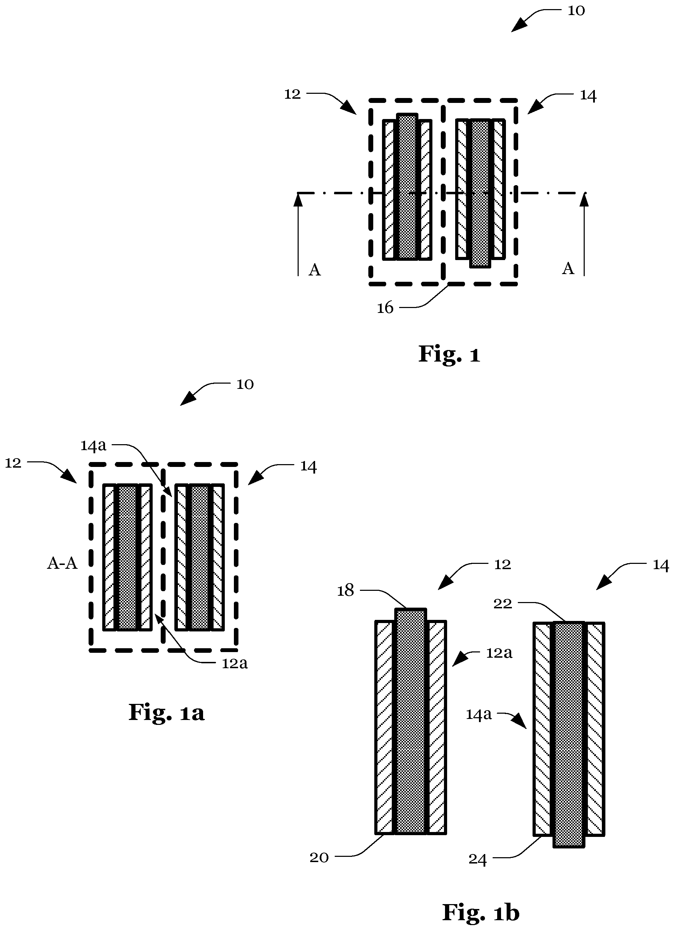

Referring now to Fig. 1, there is shown an exemplary assembly 10 comprising a first electrode 12 (anode) and a second electrode 14 (cathode) which are separated by a separator 16. As shown in Fig. 1a, a surface 12a of the anode 12 may face a surface 14a of the cathode 14, with the separator 16 filling a gap between said surfaces 12a, 14a. As shown in more detail in Fig. 1b, the anode 12 may comprise an anode current collector 18 made of a conductive material that is (substantially) resistant to the chemical reactions that are to occur in the (anode part of the) cell. In the present example, the conductive material may be a metal such as copper (e.g., a copper foil, mesh, or grid). However, the anode current collector 18 may also feature other materials or structures such as, for example, a porous graphite structure.

The anode current collector 18 may be in electrical contact with an anode conductive structure 20 (e.g., a coating) comprising an electrochemically active material including, for example, one or more of lithium, silicon, germanium, tin, carbon, zinc, cadmium, iron, manganese, etc. The anode conductive structure 20 may also include a conductive additive, such as carbon particles, and a binder. The carbon particles may be made from graphite, such as expanded graphite and natural graphite, graphene, single-walled nanotubes, multi-walled nanotubes, carbon fibers, carbon nanofibers, and mixtures thereof. Moreover, the anode conductive structure 20 may be porous.

The cathode 14 may comprise a cathode current collector 22 made of a conductive material that is (substantially) resistant to the chemical reactions that are to occur in the (cathode part of the) cell. In the present example, the conductive material may be a metal such as aluminum (e.g., an aluminum foil, mesh, or grid). However, the cathode current collector 22 may also feature other materials or structures. The cathode current collector 22 may be in electrical contact with a cathode conductive structure 24 (e.g., a coating) comprising an electrochemically active material including, for example, one or more of manganese, silver, nickel, cobalt, copper, bismuth, chromium, oxygen, phosphorus, sulfur, fluor, lithium, etc.

The cathode conductive structure 24 may also include a conductive additive, such as carbon particles, and a binder. The carbon particles may be made from graphite, such as expanded graphite and natural graphite, graphene, single-walled nanotubes, multi-walled nanotubes, carbon fibers, carbon nanofibers, and mixtures thereof. Moreover, the cathode conductive structure 24 may be porous. The anode conductive structure 20 and the cathode conductive structure 24 may also include a gassing inhibitor. The gassing inhibitor may comprise an inorganic material, such as bismuth, tin, or indium, or an organic compound, such as a phosphate ester, an ionic surfactant or a nonionic surfactant.

The separator 16 may be a membrane forming a microporous layer with a pore size above 50 Å. The membrane may be fabricated from a variety of inorganic, organic and naturally occurring materials such as nonwoven fibers (cotton, nylon, polyesters, glass), polymer films (polyethylene, polypropylene, poly (tetrafluoroethylene), poly (vinyl chloride), ceramics (Al₂O₃, BeO, SiC) and naturally occurring substances (rubber, asbestos, wood). The separator 16 may be placed between the anode conductive structure 20 and the cathode conductive structure 24. Furthermore, the separator 16 may be affixed to the anode conductive structure 20 and/or the surface of the cathode conductive structure 24. For example, the separator 16 may be wrapped around the anode conductive structure 20 and/or the cathode conductive structure 24, or the separator 16 may be "clamped" between the anode conductive structure 20 and the cathode conductive structure 24.

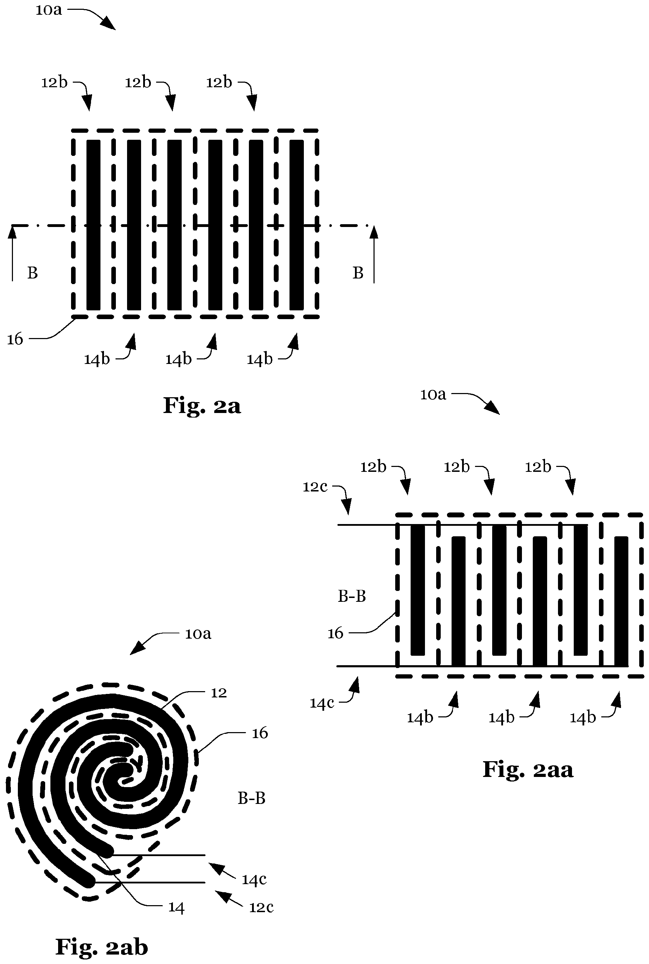

Fig. 2a shows a schematic cross-sectional view of a possible modification of the assembly 10 of Fig. 1. As shown in Fig. 2a, the cross-section of the modified assembly 10a comprises alternating anode and cathode elements 12b, 14b. For example, as shown in Fig. 2aa, the anode and cathode elements 12b, 14b may be parallel sheets which are alternatingly stacked, such that an anode element 12b is sandwiched by two cathode elements 14b and a cathode element 14b is sandwiched by two anode elements 12b. The anode elements 12b and the cathode elements may have a structure that is similar to the anode 12 and the cathode 14, respectively, as described with reference to Fig. 1. For instance, the anode elements 12b may comprise electrically connected current collectors 18 and the cathode elements 14b may comprise electrically connected current collects 22.

In particular, the anode elements 12b (or the current collectors 18) may protrude from one side of the stack, whereas the cathode elements 14b (or the current collectors 22) may protrude from another side of the stack, such that a connection can be formed between the protruding portions. For example, the anode elements 12b and the cathode elements 14b may be of about the same size, but displaced relative to each other. Analogously to what is shown in Fig. 1, the anode elements 12b may comprise anode conductive structures 20 and the and cathode elements 14b may comprise cathode conductive structures 24. In another example, illustrated in Fig. 2ab, the anode 12 and the cathode 14 may comprise rolled sheets with a spiral-shaped cross-section to fit into a cylindrical or prismatic casing.

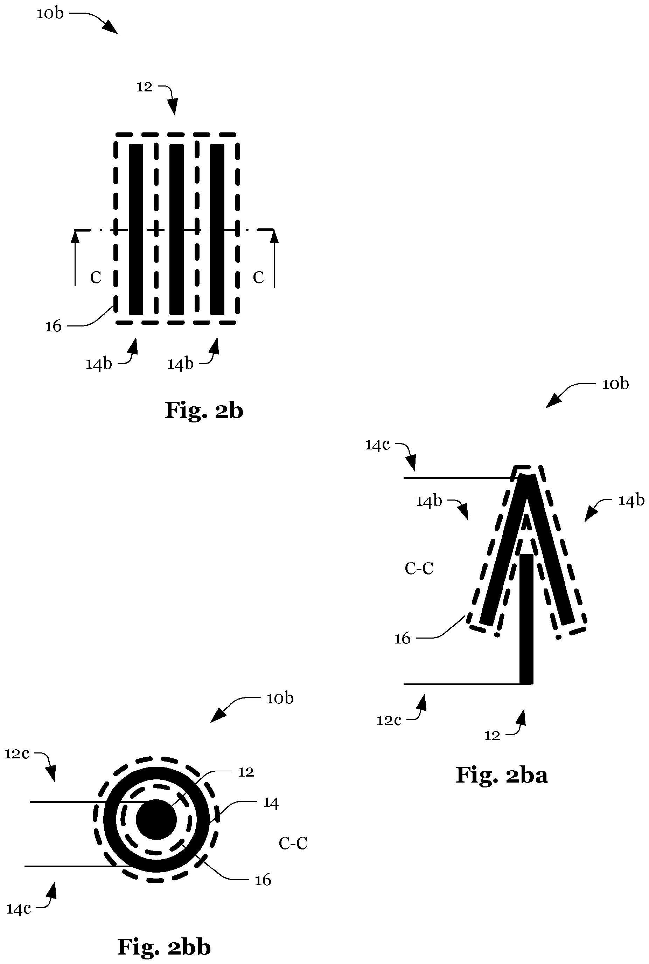

Fig. 2b shows a schematic cross-sectional view of another possible modification of the assembly 10 of Fig. 1. As shown in Fig. 2b, the cross-section of the modified assembly 10b comprises an anode 12 that is sandwiches by two cathode elements 14b. As shown in Fig. 2ba and 2bb, such a configuration may comprise a folded cathode sheet or an anode 12 that is arranged within a tubular cathode 14. As shown in Fig. 2aa, 2ab, 2ab and 2bb, the anode 12 and the cathode 14 may be connected to terminals 12c, 14c.

However, while Figs. 2a, 2aa, 2ab, 2b, 2ba, and 2bb illustrate examples for arranging the electrodes 12, 14 relative to each other, it is to be noted that the invention is not limited to a particular configuration. That is, the following structural or procedurals examples equally relate to assemblies 10, 10a, 10b with stacked (or rolled), folded (Z-fold, Miura-fold, etc.) or cylindrical/tubular electrodes 12, 14, and in principle to any possible configuration, although the description is continued with reference to the assembly 10 shown in Fig. 1 that basically features the first electrode 12 (anode) and the second electrode 14 (cathode), which are separated by the separator 16.

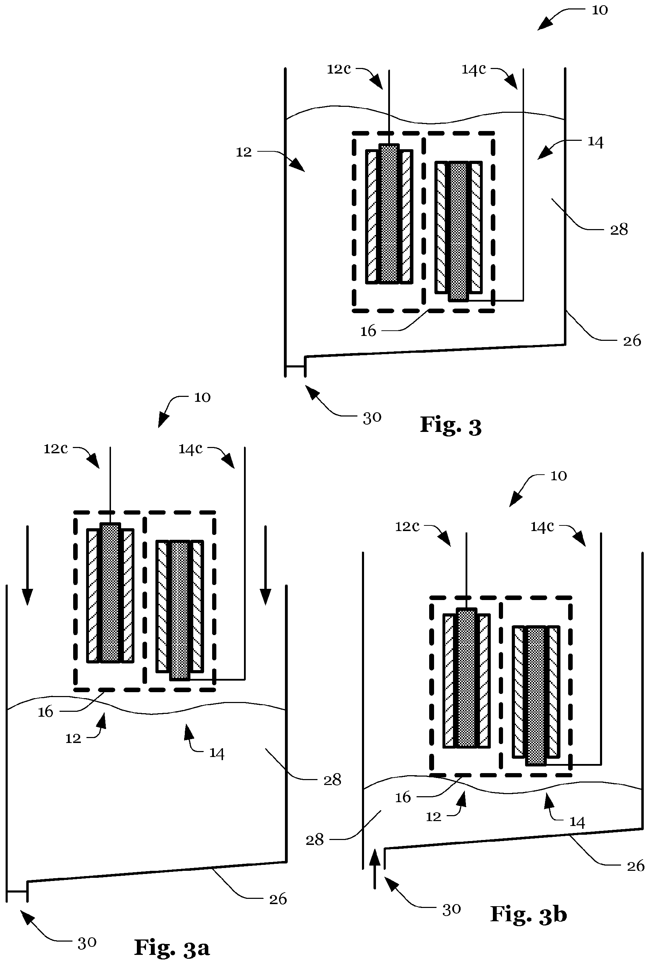

Fig. 3 shows a container 26 containing an electrolyte bath 28. The container 26 may be made of an insulating material and have a shape that is adapted to the assembly, e.g., a cylindrical or prismatic shape. Moreover, the container 26 may be provided with a temperature sensor and/or a cooling and/or heating device to control the temperature within the electrolyte solution during formation. As the assembly 10 is immersed in the electrolyte solution, the assembly 10 is wetted with the electrolyte solution. The electrolyte solution may, for example, comprise a lithium salt in an organic solvent, such as ethylene carbonate, dimethyl carbonate, and diethyl carbonate, or mixtures thereof.

As shown in Fig. 3, the container 26 may be substantially larger in size than the assembly 10 such that there is a gap between the surface of the assembly 10 and the surface of the inner wall(s) of the container 26. For example, the volume of the container may be 10-50% larger than the volume of the assembly 10. Moreover, the container 26 may be positioned in the container 26 such that the surface of the assembly 10 and the surface of the inner wall(s) of the container 26 do not make contact, even if the volume of the assembly 10 increases due to being soaked with the electrolyte solution. The gap between the surface of the assembly 10 and the surface of the inner wall(s) of the container 26 avoids that the assembly 10 is compressed and ensures that electrolyte solution may flow freely along the surface of the conductive structures 20, 24, which facilitates that all elements of the assembly 10 become evenly saturated with the electrolyte.

As shown in Fig. 3a, the assembly 10 may be lowered into the container 26 after the container 26 has been filled with the electrolyte solution. As shown in Fig. 3b, filling the electrolyte solution into the container 26 may start when/after the assembly 10 has been (fully or partially) inserted into the container 26. Moreover, lowering the assembly 10 into the electrolyte bath or filling the container 26 with the electrolyte solution may be performed in a single continuous operation or step-wise. The container 26 may be filled via a (closable) container opening 30 (or valve) that may be connected via a supply/exhaust line to a storage tank that stores the electrolyte solution.

As the electrolyte solution permeates the (porous structures of the) assembly 10 from one side, trapping gas inside the assembly 10 may be avoided. Moreover, the assembly 10 may be arranged or rotated relative to the liquid level (before or) while the electrolyte solution permeates the (porous structures of the) assembly 10 such that degassing paths are aligned/oriented in the vertical direction which may further decrease the amount of gas remaining within the assembly 10 after the initial immersion. Moreover, the immersion speed may be controlled to avoid trapping gas inside the assembly 10, e.g., portions of the assembly 10 that are likely to trap gas may be immersed more slowly than other portions.

Before filling the electrolyte solution into the container 26, the container 26 may be evacuated and inert gas may be flown into the container 26. For example, the container 26 (or a plurality of containers 26) may be arranged in a larger compartment that features an inert gas atmosphere comprising nitrogen, helium, etc. The atmospheric pressure may be chosen such that a transpirational pull is produced, which draws the electrolyte solution into the (porous structures of the) assembly 10 while solvent evaporates at a surface of (the porous structures of) the assembly 10. In another example, the atmospheric pressure may be chosen such that evaporation of the electrolyte solution is substantially avoided. For example, the atmospheric pressure may be controlled to be above the saturation vapor pressure of the most volatile component of the electrolyte solution.

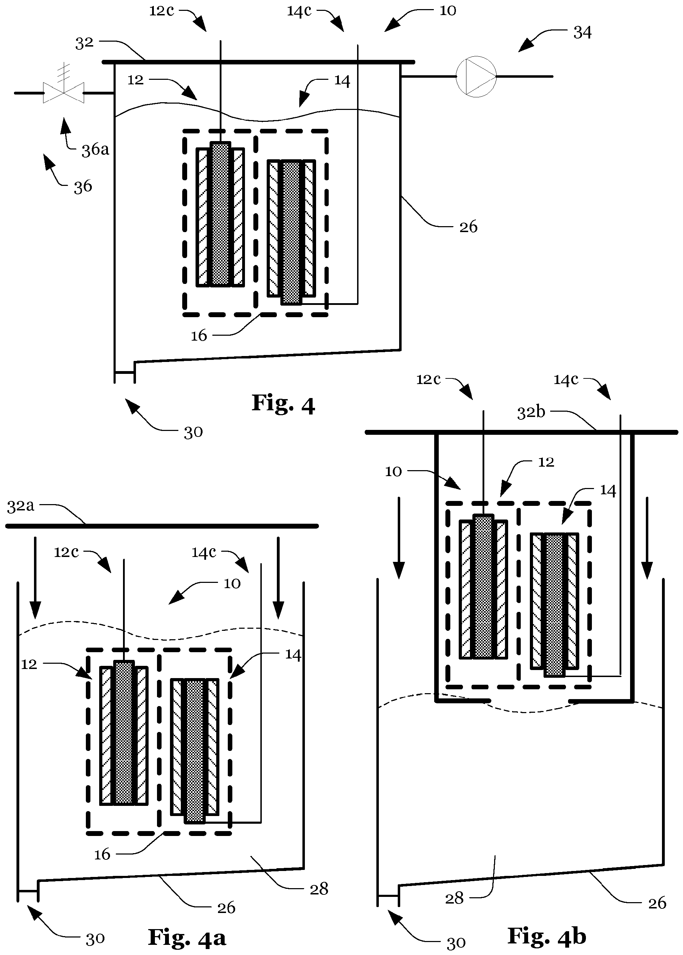

As shown in Fig. 4, the container 26 may be provided with a cover 32 that seals the container 32. If the cover 32 hermetically seals the container 26, the container 26 may be evacuated by a pump 34 and the atmosphere within the container 26 may be controlled by controlling the flow of inert gas into the container 26 via a gas feeding line 36 featuring a valve 36a, such as, for example, a pressure relief valve. In that case, the electrolyte solution may be flown into the container 26 after the container 26 is hermetically sealed by the cover 32, such that it may not be necessary to arrange the container 26 in a larger compartment featuring a (inert) gas atmosphere with a particular atmospheric pressure.

As shown in Fig. 4a, the cover 32 may be designed as a lid 32a that seals the container 26 when the lid 32a is attached to the container 26. The terminals 12c, 14c may extend through openings in the lid 32a, or may be connected to an interface/plug in the lid 32a that enables an electric connection through vias in the lid 32a. Moreover, the lid 32a may feature a non-conductive material to electrically insulate the terminals 12c, 14a, form the (rest of the) container 26. As indicated by the dotted line, the container 26 may be sealed before or after the electrolyte solution has been added to the container 26. Moreover, the atmosphere within a hermetically sealed container 26 may be controlled analogously to what is described with reference to Fig. 4 (i.e., by controlling the pump 34, the gas feeding line 36 and the valve 36a).

As shown in Fig. 4b, the container 26 may also be provided with a casing element 32b that seals the container 26 when the casing element 32b is attached to the container 26. The casing element 32b may be similar to the lid 32a, yet designed to serve as a support for the assembly 10 when the assembly 10 has been encased and the cell is ready for use. In other words, the casing element 32b may serve for sealing the container 26 during wetting (and/or subsequent processing steps that are to be performed in the electrolyte bath 28) and additionally for hermetically sealing the final casing. Moreover, the casing element 32b may hold the elements of the assembly 10 in place during immersion. As indicated by the dotted line, the container 26 may be sealed before or after the electrolyte solution has been added to the container 26. Moreover, the atmosphere within a hermetically sealed container 26 may be controlled analogously to what is described with reference to Fig. 4 (i.e., by controlling the pump 34, the gas feeding line 36 and the valve 36a).

Although the description is continued with reference to the cover 32, it is clear that the disclosure equally applies to scenarios where the cover 32 is designed as the lid 32a (as in Fig. 4a), or where the cover 32 is designed as the casing element 32b (as in Fig. 4b), unless otherwise indicated.

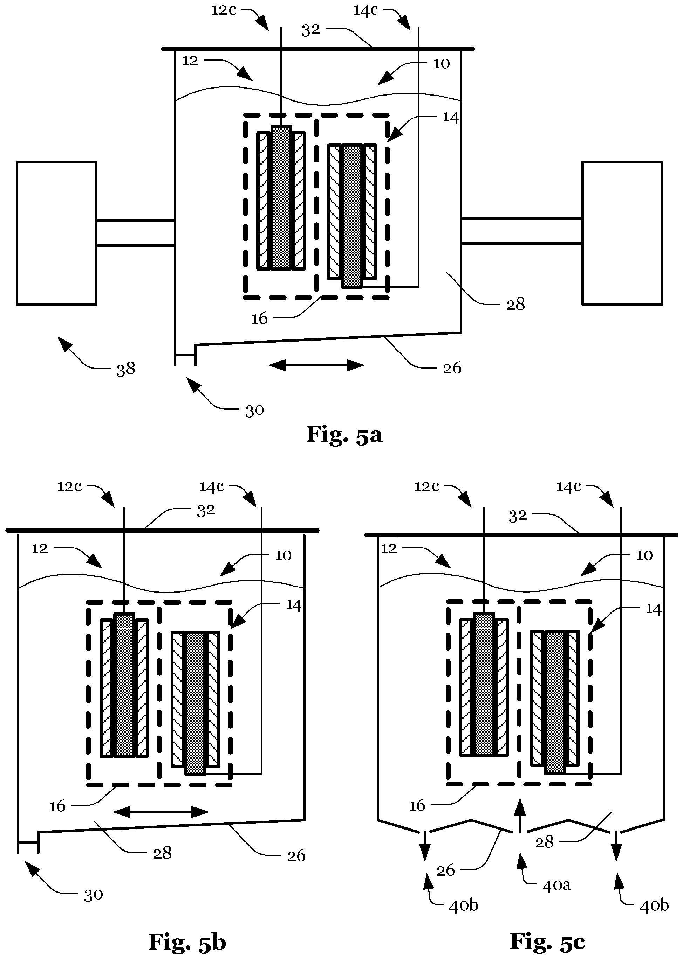

Fig. 5a-5c illustrate examples of providing for a relative motion between the assembly 10 and the electrolyte solution during wetting (and/or subsequent processing steps that are to be performed in the electrolyte bath 28). As shown in Fig. 5a, the container 26 may be attached to a device 38 that exerts a mechanical force onto the wall(s) of the container such as a vibrator or shaker. However, it is clear that the horizontal motion in Fig. 5 is merely illustrative. In another example, a vertical motion, a combined horizontal and vertical motion, and/or a rotational motion may be applied, depending on the design of the assembly 10. For example, if the assembly 10 features a jelly-roll design, the container 26 may be rotated at varying rotational speed to urge electrolyte solution along the winding path between the electrodes 12, 14.

Fig. 5b illustrates a scenario where the cover 32 is allowed to move relative to the container 26 such that the assembly 10 may stir the electrolyte solution. If the cover 32 does not hermetically seal the container 26, the atmosphere within the container 26 may be (indirectly) controlled by controlling the inert gas atmosphere of a larger compartment (not shown), as described above. However, if the cover 32 hermetically seals the container 26, the atmosphere within the container 26 may also be directly controlled as described above with reference to Fig. 4 (i.e., by controlling the pump 34, the gas feeding line 36 and the valve 36a).

As shown in Fig. 5c, the container 26 may alternatively (or in addition) comprise one or more inflow openings 40a and one or more outflow openings 40b for circulating the electrolyte solution. When circulating the electrolyte solution, the concentration of electrolyte within the electrolyte bath 28 may be controlled, e.g., by adding electrolyte or solvent. Moreover, the circulated electrolyte solution may be filtered to either remove unwanted particles from the electrolyte solution, or to separate electrolyte from the solvent. In addition, the flow inside the container 26 may be directed at portions of the assembly 10 that are prone to poor or slow wetting, such that the overall wetting process is improved/sped-up.

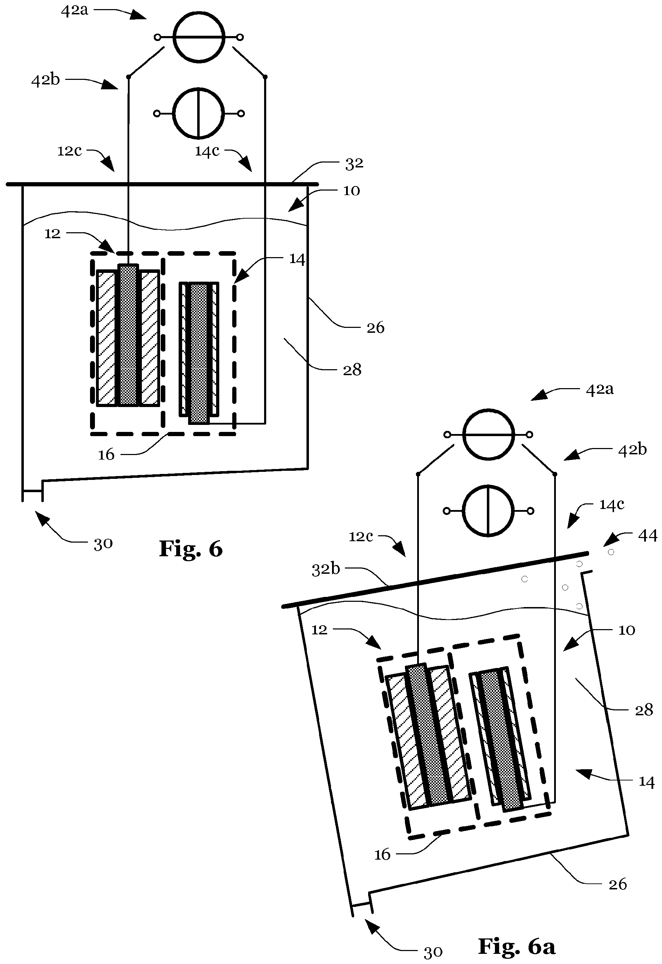

Fig. 6 illustrates a formation treatment. As shown in Fig. 6, the formation treatment may comprise connecting the terminals 12c, 14c of the assembly 10 via a power line to a voltage source 42a or a current source 42b and applying a voltage or voltage pattern to the electrodes 12, 14 of the assembly 10. Applying a voltage or voltage pattern to the electrodes 12, 14 of the assembly 10 may be started once the assembly 10 is partially or fully immersed in the electrolyte bath 28. Moreover, while the formation treatment is performed and ions are consumed from the electrolyte solution, procedures as described with reference to Fig. 4 to Fig. 5c may be performed to improve the supply of electrolyte to the anode conductive structure 20 and/or the cathode conductive structure 24 to avoid local shortages of electrolyte that would disrupt the formation and/or increase the time required for completing the formation. As a result, a (more even) solid-electrolyte-interphase may be formed at the anode 12.

Fig. 6a illustrates degassing during the formation, according to an example. Whereas degassing may be performed by exhausting the gas through an opening in the lid 32a, such an opening may be unfavorable for the casing element 32b, which is to be used for the encasing. In this scenario, the container 26 may be arranged for an opening 44 in a wall of the container 26 to be above solvent level (e.g., by rotating the container 26), such that gas can be exhausted through said opening 44. For example, the opening 44 may be connected to a waste gate that allows exhausting the gas if an overpressure occurs. Moreover, the opening may also be usable to flow inert gas into the container 26, as described above.

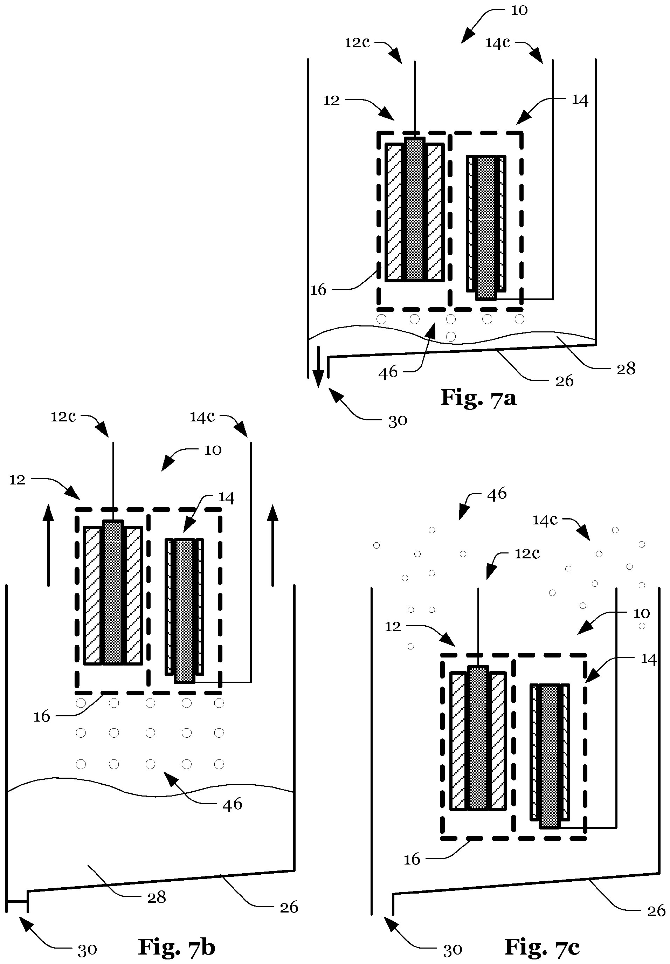

Fig. 7a-c illustrate examples for draining the assembly 10. As shown in Fig. 7a, the solvent may be exhausted via the opening 30 at the bottom of the container 26. The assembly 10 may be held in place within the container 26 to allow superfluous solvent 46 to flow (or drip) into the container 26. The exhausted solvent (and electrolyte contained therein) may be recycled (e.g., filtered and replenished with electrolyte) and stored in the storage tank for reuse. As shown in Fig. 7b, the assembly 10 may also be raised above solvent level to allow superfluous solvent 46 to flow (or drip) into the container 26. Furthermore, as shown in Fig. 7c, superfluous solvent 46 may also be evaporated. After emptying the container 26, a cleaning routine may be performed to remove any residues from the container 26.

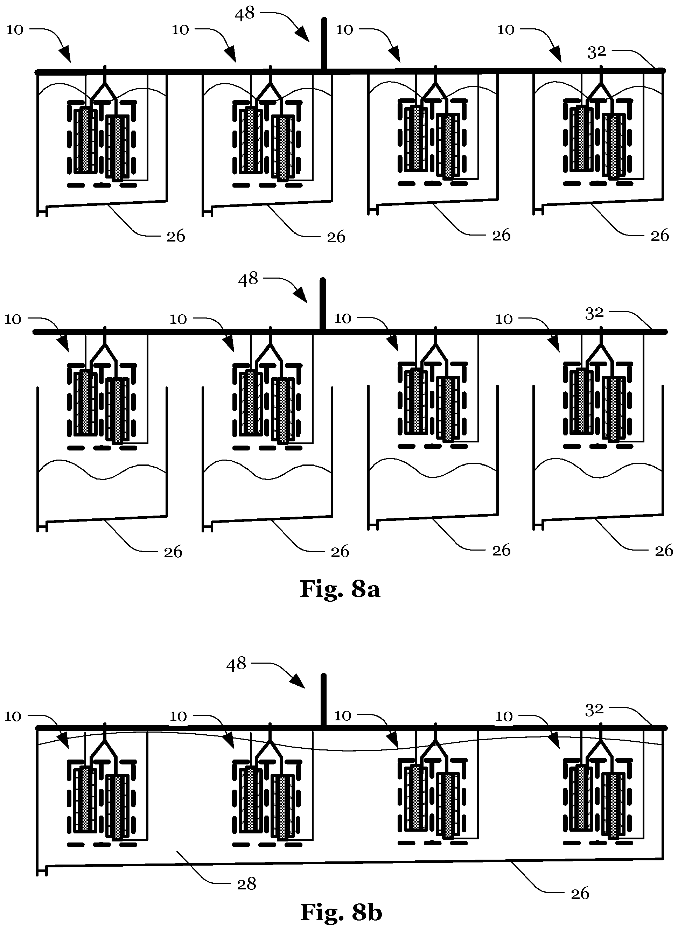

Fig. 8a and Fig. 8b illustrate batch processing of an exemplary electrochemical cell manufacturing apparatus. As shown in Fig. 8, the apparatus may comprise a conveyor 48 which immerses a batch of assemblies 10 into a plurality of containers 26 to perform the above-described process(es) for the assemblies 10 in parallel. After wetting (and optionally applying a formation treatment), the conveyor 48 withdraws the assemblies 10 from the containers 26 for further processing and encasing. As shown in Fig. 8b, the batch of assemblies 10 may also be immersed into a single container 26, instead of a plurality of containers 26. Moreover, it is noted that features of the apparatus may relate to one, several, or all of the above-described aspects which are not repeated hereinafter for the sake of brevity.

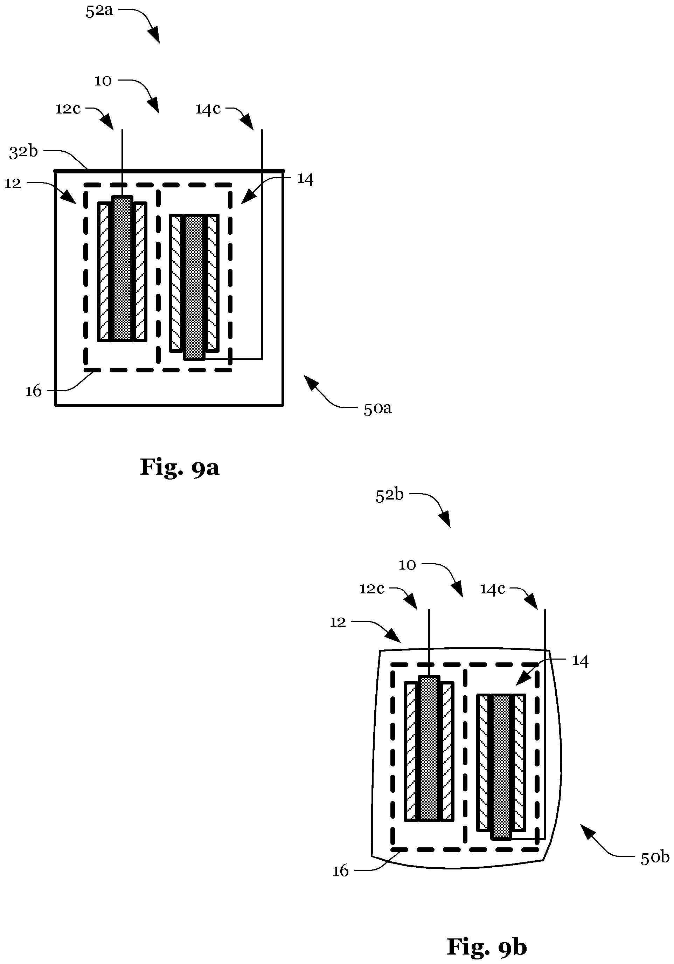

Fig. 9a and 9b show schematic cross-sectional view of exemplary electrochemical cells 52a that are manufactured using the above-described process(es). As shown in Fig. 9a, the cell 52a may feature the assembly 10 encased in a (prismatic or cylindrical) rigid casing 50a. Notably, the casing 50a may include the casing element 32b which has already been used during the wetting. As shown, portions (e.g. an edge or rim) of the casing element 32b may be removed to match the smaller form-factor of the casing 50a (as compared to the electrolyte bath 28). In the scenarios shown in Fig. 8a and 8b, the cover 32 may also be divided (e.g., cut or broken) in several casing elements 32b.

As shown in Fig. 9b, the cell 52b may also feature the assembly 10 encased in a flexible casing (e.g., pouch cell). Moreover, as superfluous solvent 46 has been removed from the assembly 10, a space within the casings 50a, 50b may be filled with gas (e.g., an inert gas). Furthermore, as the wetting and formation treatment has been performed before inserting the assemblies 10 in the casings 50a, 50b, hermetically sealing the casings 50a, 50b may be facilitated, as the casings may be free of inflow openings.

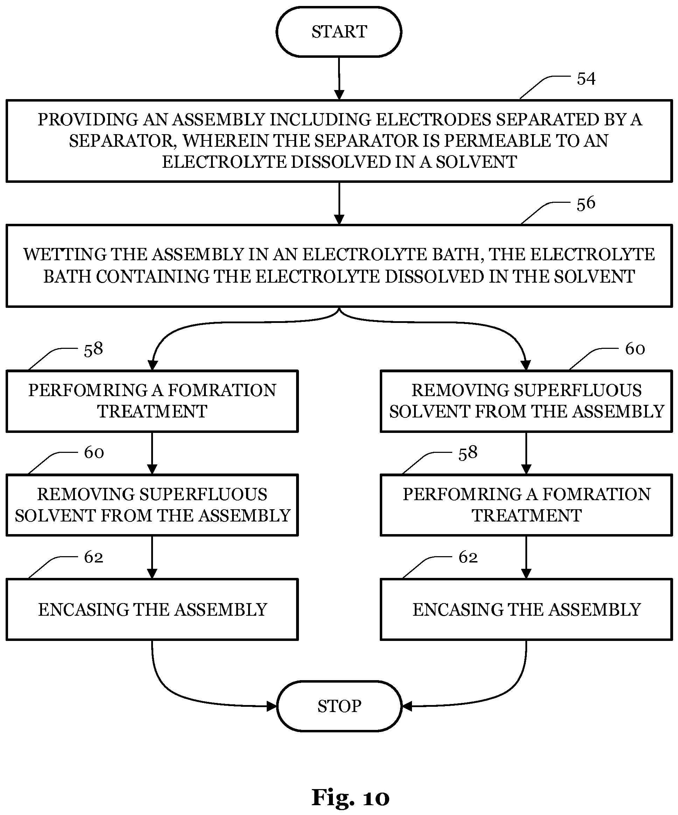

Fig. 10 shows a flow chart of exemplary processes for manufacturing an electrochemical cell 52a, 52b in accordance with the above-described aspects. The processes start with a step 54 of providing the assembly 10 including electrodes 12,14 separated by the separator 16, wherein the separator 16 is permeable to an electrolyte dissolved in a solvent. As described above, the assembly 10 may comprise various structures and materials, depending on the cell 52a, 52b that is to be manufactured. At step 56, the processes are continued by wetting the assembly 10 in the electrolyte bath 28, the electrolyte bath 28 containing the electrolyte dissolved in the solvent, and saturating the assembly 20 with the electrolyte. As described above, the electrolyte bath 28 may contain a surplus of solvent and/or electrolyte. This may allow for improved wetting (and formation treatment), such that a more even saturation of the assembly 10 with electrolyte can be achieved in at least the same amount of time, as local electrolyte depletion can be avoided.

After wetting and before or after performing the formation treatment step 58, the process may be continued at step 60 with removing superfluous solvent 46 from the assembly 10. As shown in Fig. 7a-c, removing superfluous solvent 46 may comprise draining the assembly 10. After draining the assembly 10, the process may be finished at step 62 by encasing the assembly 10. As shown in Fig. 9a and 9b, rigid or flexible casings 50a, 50b may be used and the dimensions of the casings 50a, 50b may be chosen to moderately compress the assemblies 10, to increase the overall energy density of the ready for use cells 52a, 52b. As superfluous solvent 46 has been removed from the assemblies 10, the casings 50a, 50b may not be filled-up with only liquid and solid materials, but comprise gas trapped within voids of the assemblies 10 from which the superfluous solvent 46 has been drained.

The aforesaid process may be performed on a single assembly 10 or in parallel on a batch of assemblies 10 in the electrochemical cell manufacturing apparatus that has been further detailed with reference to Fig. 8a and 8b. Hence, all aspects described in relation to the process also relate to the apparatus and assemblies 10, 10a, 10b, and vice versa.

### LIST OF REFERENCE NUMERALS

- 10: assembly
- 10a: assembly (modifications)
- 10b: assembly (modifications)
- 12: electrode (anode)
- 12a: electrode surface (anode)
- 12b: electrode element (anode)
- 12c: electrode terminal (anode)
- 14: electrode (cathode)
- 14a: electrode surface (cathode)
- 14b: electrode element (cathode)
- 14c: electrode terminal (cathode)
- 16: separator
- 18: current collector (anode)
- 20: conductive structure comprising the anode active material
- 22: current collector (cathode)
- 24: conductive structure comprising the cathode active material
- 26: container
- 28: electrolyte bath
- 30: opening (liquid supply/exhaust)
- 32: cover
- 32a: lid
- 32b: casing element
- 34: pump
- 36: gas feeding line
- 36a: valve
- 38: device (shaker/vibrator)
- 40a: opening (inflow)
- 40b: opening (outflow)
- 42a: voltage source
- 42b: current source
- 44: opening (gas supply/exhaust)
- 46: superfluous solvent
- 48: conveyor
- 50a: casing (final)
- 50b: casing (final)
- 52a: cell (ready for use)
- 52b: cell (ready for use)
- 54-62: process steps

## Claims

1. A process for manufacturing an electrochemical cell (52a, 52b), comprising:
providing (54) an assembly (10, 10a, 10b) including electrodes (12, 14) separated by a separator (16), wherein the separator (16) is permeable to an electrolyte dissolved in a solvent;
wetting (56) the assembly (10, 10a, 10b) in an electrolyte bath (28), the electrolyte bath (28) containing the electrolyte dissolved in the solvent and saturating the assembly (10, 10a, 10b) with the electrolyte;
removing (60) superfluous solvent (46) from the assembly (10, 10a, 10b); and
encasing (62) the assembly (10, 10a, 10b).

2. The process of claim 1, wherein removing (58) superfluous solvent (46) from the assembly (10, 10a, 10b) comprises draining the assembly (10, 10a, 10b).

3. The process of claim 1 or 2, further comprising:
applying a voltage to the electrodes (12, 14) of the assembly (10, 10a, 10b), while the assembly (10, 10a, 10b) is immersed in the electrolyte bath (28).

4. The process of claim 3, wherein applying a voltage to the electrodes (12, 14) of the assembly (10, 10a, 10b), while the assembly (10, 10a, 10b) is immersed in the electrolyte bath (28), comprises forming a solid-electrolyte-interphase at an anode (12) of the assembly (10, 10a, 10b).

5. The process of any one of claims 1 to 4, wherein the electrolyte bath (28) is provided in a container (26) of an apparatus for manufacturing electrochemical cells (52a, 52b), the apparatus being configured to withdraw solvent from the container (26) after wetting (56) the assembly (10, 10a, 10b) in the electrolyte bath (28).

6. The process of any one of claims 1 to 4, wherein the electrolyte bath (28) is provided in a container (26) of an apparatus for manufacturing electrochemical cells (52a, 52b), the apparatus being configured to adapt an atmospheric pressure within the container (26) before or while filling the container (26) with the dissolved electrolyte.

7. The process of any one of claims 1 to 6, wherein the electrolyte bath (28) comprises lithium ions.

8. An electrochemical cell manufacturing apparatus, comprising:
one or more containers (26);
a supply line to fill the one or more containers (26) with an electrolyte solution; and
a conveyor (48) to move a plurality of batches of one or more assemblies (10, 10a, 10b), one after the other, in a first position relative to the one or more containers (26), wherein the one or more assemblies (10, 10a, 10b) are immersed in the electrolyte solution when being positioned in the first position, if the one or more containers (26) are filled with the electrolyte solution.

9. The apparatus of claim 8, wherein the conveyor (48) is to move a batch of one or more assemblies (10, 10a, 10b) from the first position to a second position relative to the one or more containers (26), wherein the one or more assemblies (10, 10a, 10b) are above the one or more containers (26) for draining the one or more assemblies (10, 10a, 10b) when being positioned in the second position.

10. The apparatus of claim 8 or 9, further comprising:
a power line for applying a voltage to electrodes (12, 14) of the one or more assemblies (10, 10a, 10b) while the one or more assemblies (10, 10a, 10b) are immersed in the electrolyte solution.

11. The apparatus of claim 10, wherein applying a voltage to the electrodes (12, 14) of the one or more assemblies (10, 10a, 10b), while the one or more assemblies (10, 10a, 10b) are immersed in the electrolyte solution, comprises forming a solid-electrolyte-interphase at an anode (12) of the one or more assemblies (10, 10a, 10b).

12. The apparatus of any one of claims 8 to 11, further comprising:
an exhaust line for removing electrolyte solution from the one or more containers (26).

13. The apparatus of claim 12, further comprising:
a filter to filter the removed electrolyte solution; and
a reservoir to store the filtered electrolyte solution and to provide the filtered electrolyte solution to the supply line.

14. An electrochemical cell (52a, 52b), comprising:
a casing (50a, 50b), the casing (50a, 50b) being impermeable to an electrolyte dissolved in a solvent inside the casing (50a, 50b);
an assembly (10, 10a, 10b) inside the casing (50a, 50b), the casing (50a, 50b) including electrodes (12, 14) separated by a separator (16), wherein the separator (16) is permeable to the electrolyte dissolved in the solvent;
wherein 5% or more of the volume of the casing (50a, 50b) is filled with a gas.

15. The electrochemical cell (52a, 52b) of claim 14, wherein the electrolyte dissolved in the solvent comprises lithium ions.
